# EUROPÄISCHE PATENTSCHRIFT

(11) **EP 2 810 752 B1**
(45) Veröffentlichungstag und Bekanntmachung des Hinweises auf die Patenterteilung: **30.03.2016**
(21) Anmeldenummer: 13170797.8
(22) Anmeldetag: 06.06.2013
(51) Int. Cl.: B26D 3/02, B26D 7/08

(54) **Verfahren zum Herstellen eines Zuschnitts aus einem Fasergelege**
Method for producing a blank from fibre fabric
Procédé de fabrication d'une découpe à partir d'un non tissé de fibres

(43) Veröffentlichungstag der Anmeldung: 10.12.2014
(73) Patentinhaber: GFM GmbH, 4400 Steyr (AT)
(72) Erfinder: Heidlmayer, Franz, 4502 St. Marien (AT)
(74) Vertreter: Patentanwaltskanzlei Hübscher

(56) Entgegenhaltungen:
- US-B2- 7 823 490

## Beschreibung

Die Erfindung bezieht sich auf ein Verfahren zum Herstellen eines Zuschnitts aus einem Fasergelege mit einem eine Fase bildenden Rand, wobei das auf einer Schneidauflage eines Schneidtischs angesaugte Fasergelege mit einem in die Schneidauflage reichenden Konturschnitt entlang der Sollkontur des Zuschnitts durchtrennt und mit einem unter einem flachen Fasenwinkel entlang der Sollkontur verlaufenden Fasenschnitt mit der Fase versehen wird.

Um Zuschnitte von Gelegen aus mit Kunststoff imprägnierten Fasern beim Aushärten des Kunststoffs randseitig zugfest miteinander verbinden zu können, werden möglichst große randseitige Verbindungsflächen gefordert, was zu ausgeprägten Randfasen der Zuschnitte mit einem flachen Fasenwinkel führt. Das Herstellen solcher Zuschnitte aus Fasergelegen macht jedoch Schwierigkeiten, weil nicht nur ein genauer Konturverlauf, sondern auch eine genau bearbeitete Fase zu fordern sind. Liegen nämlich die durch die geschnittenen Fasen gebildeten Verbindungsflächen nicht vollflächig aneinander an, so können sich in Zwischenräumen zwischen den Verbindungsflächen beim Aushärten des Kunststoffs nicht faserverstärkte Kunststoffbereiche ergeben, die Anlass zu einer Rissbildung geben können.

Zum Herstellen von solchen Zuschnitten aus einem mit Kunststoff imprägnierten Fasergelege ist es bekannt (US 7 823 490 B2, US 8 132 487 B2), die Sollkontur des Zuschnitts nicht durch einen entlang der Sollkontur geführten Fasenschnitt herzustellen, sondern den Zuschnitt zunächst vom restlichen Fasergelege durch einen genauen Konturschnitt zu trennen, der senkrecht zu einer Tischauflage für das Fasergelege entlang der Sollkontur geführt wird und in die Schneidauflage des Schneidtischs reicht. Erst dann wird der Fasenschnitt zur Fertigstellung des Zuschnittrands vorgenommen. Obwohl sowohl für den Konturschnitt als auch für den Fasenschnitt flache Messer mit einem Schwingungsantrieb auf der Basis von Ultraschall eingesetzt werden, wird das vom Zuschnitt abzutrennende Fasergelege insbesondere beim Eindringen des Messers für den Fasenschnitt entlang des Messerkeils mit der Wirkung verdrängt, dass die auftretenden Kräfte nicht nur eine entsprechende Belastung des Messers mit sich bringen, sondern auch die Schnittgenauigkeit beeinflussen. Um der Messerbelastung und den damit verbundenen Nachteilen vor allem hinsichtlich der Schnittgenauigkeit zu begegnen, wurde daher vorgeschlagen, den durch den Fasenschnitt abzutrennende Reststreifen des Fasergeleges mit zusätzlichen, bis zur Fase reichenden, konturparallelen Einschnitten zu versehen, sodass die durch die Einschnitte voneinander getrennten Teilstreifen beim Fasenschnitt leichter durch das Fasenmesser verdrängt werden können. Die Messerbelastung bleibt aber erheblich, wozu noch kommt, dass aufgrund der unvermeidbaren Toleranzen die Gefahr besteht, dass durch die Einschnitte die Fase angeritzt wird.

Der Erfindung liegt somit die Aufgabe zugrunde, ein Verfahren zum Herstellen eines Zuschnitts aus einem Fasergelege mit einem eine Fase bildenden Rand so auszugestalten, dass bei einer vergleichsweise geringen Messerbelastung eine hohe Schnittgenauigkeit sichergestellt werden kann.

Ausgehend von einem Verfahren der eingangs geschilderten Art löst die Erfindung die gestellte Aufgabe dadurch, dass das Fasergelege zunächst durch zwei oberhalb der Schneidauflage endende und außerhalb des Sollquerschnitts des Rands verlaufende Schnitte vorgeschnitten wird, nämlich einen quer zum Fasergelege entlang des Konturbereichs verlaufenden Vorschnitt und einen eine Bearbeitungszugabe zur Fase bestimmenden Entlastungsschnitt, und dass dann die Fase mit dem außerhalb der Sollkontur im Fasergelege endenden Fasenschnitt geschnitten wird, bevor die Sollkontur des Zuschnitts durch den Konturschnitt hergestellt wird.

Da sowohl der quer zum Fasergelege im Konturbereich des Zuschnitts verlaufende Vorschnitt als auch der Entlastungsschnitt, der dem Sollverlauf der Fase in einem Abstand folgt, außerhalb des Sollquerschnitts des Zuschnittrands angebracht werden, braucht für diese Schnitte keine große Genauigkeit gefordert zu werden. Sie dienen zunächst nur dazu, aus dem Fasergelege einen den Fasenschnitt nicht mehr maßgebend beeinflussenden Reststreifen zu schneiden, sodass der nachfolgende Fasenschnitt genau und mit einer nur vergleichsweise geringen Belastung des Fasenmessers durchgeführt werden kann. Dies gelingt deshalb, weil oberhalb des Sollverlaufs der Fase lediglich eine Bearbeitungszugabe verbleibt, während der übrige Reststreifen durch den Entlastungsschnitt von der Bearbeitungszugabe entkoppelt ist. Da sich außerdem das Fasergelege im Bereich der Schneidauflage durchgehend über die Sollkontur des Zuschnitts hinweg erstreckt und daher auch durchgehend an den Schneidtisch angesaugt wird, kann der Fasenschnitt mit geringen, im Wesentlichen nur von der Dicke der Bearbeitungszugabe abhängigen Belastungen durchgeführt werden. Es fehlt folglich nur mehr der Konturschnitt, der wegen der verbliebenen, auch durch den Fasenschnitt nicht unterbrochenen Faserbrücke zwischen dem Zuschnitt und dem verbleibenden Rest des Fasergeleges und zufolge der davon abhängigen schnittgerechten Halterung auf der mit Unterdruck beaufschlagten Schneidauflage mit hoher Genauigkeit vorgenommen werden kann.

Wird der quer zum Fasergelege verlaufende Vorschnitt vor dem mit Abstand oberhalb der Fase vorzunehmenden Entlastungsschnitt durchgeführt, so kann der durch den Entlastungsschnitt betroffene Reststreifen des Fasergeleges leichter durch das Entlastungsschnittmesser verdrängt werden, weil die Verbindung zum restlichen Fasergelege durch den Vorschnitt zumindest weitgehend gelöst ist und daher die mechanischen Eigenschaften des durch den Vorschnitt vom übrigen Fasergelege getrennten Reststreifens nicht vom übrigen Fasergelege beeinflusst werden können. Dies gilt insbesondere, wenn sich die Schnittflächen des Vorschnitts und des Entlastungsschnitts schneiden. In diesem Fall entfällt eine sonst verbleibende Faserbrücke zwischen dem durch den Vorschnitt und den Entlastungsschnitt abgetrennten Reststreifen und dem übrigen Fasergelege, sodass dieser Reststreifen im Bedarfsfall auch entnommen werden kann, bevor der Fasenschnitt durchgeführt wird.

Um das Messer für den Entlastungsschnitt während des Schnitts zu entlasten, kann das Fasergelege vor dem Entlastungsschnitt im Bereich der Fase durch wenigstens einen mit Abstand vom Vorschnitt verlaufenden Einschnitt geteilt werden, der in der durch den Entlastungsschnitt bestimmten Bearbeitungszugabe endet. Durch diese zusätzliche Unterteilung des durch den Vorschnitt erhaltenen Reststreifens des Fasergeleges können die für das schnittbedingte Verdrängen des Reststreifens maßgebenden mechanischen Eigenschaften zusätzlich verbessert werden, was üblicherweise nur für dickere Fasergelege in Frage kommt, zumal mit zusätzlichen Einschnitten der Bearbeitungsaufwand steigt. Wegen der in der Bearbeitungszugabe endenden Einschnitte bleibt die nach dem Entlastungsschnitt zu schneidende Fase von den Einschnitten unberührt.

Der Vorschnitt braucht nicht senkrecht zum Fasergelege geführt zu werden. Soll der durch den Vorschnitt abgetrennte Reststreifen vor dem Entlastungsschnitt aus dem Fasergelege ausgehoben werden, so kann ein Vorschnitt, der etwa senkrecht zur Schnittfläche des Entlastungsschnitts verläuft, Vorteile mit sich bringen. Für den Bearbeitungsablauf ergeben sich allerdings im Allgemeinen besonders günstige Verfahrensbedingungen, wenn der Vorschnitt in einer der Schnittfläche des Konturschnitts entsprechenden Fläche durchgeführt wird, weil dann die nach dem Fasenschnitt verbleibende Faserbrücke zwischen dem Zuschnitt und dem übrigen Fasergelege durch den den Vorschnitt lediglich vertiefenden Konturschnitt zu durchtrennen ist.

Anhand der Zeichnung wird das erfindungsgemäße Verfahren näher erläutert. Es zeigen
- Fig. 1: einen Querschnitt eines nach dem erfindungsgemäßen Verfahren hergestellten Zuschnitts aus einem Fasergelege ausschnittsweise in einem Randbereich und die
- Fig. 2 bis 4: ein an einen Schneidtisch angesaugtes Fasergelege in unterschiedlichen Bearbeitungsstufen zur Herstellung eines Zuschnitts entsprechend der Fig. 1 in einem Querschnitt senkrecht zur Schnittrichtung und damit zum Konturverlauf.

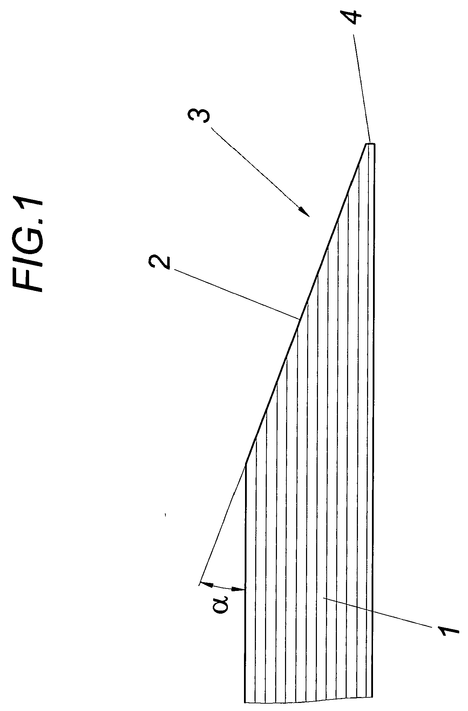

Wie der Fig. 1 entnommen werden kann, soll der aus einem Fasergelege auszuschneidende Zuschnitt 1 einen eine ausgeprägte Fase 2 bildenden Rand 3 mit einem flachen Fasenwinkel α von beispielsweise 17° bis 25° aufweisen. Die die Fase 2 begrenzende äußere Sollkontur 4 wird nicht durch die Fase 2, sondern durch einen zum Zuschnitt 1 quer verlaufenden Konturschnitt bestimmt.

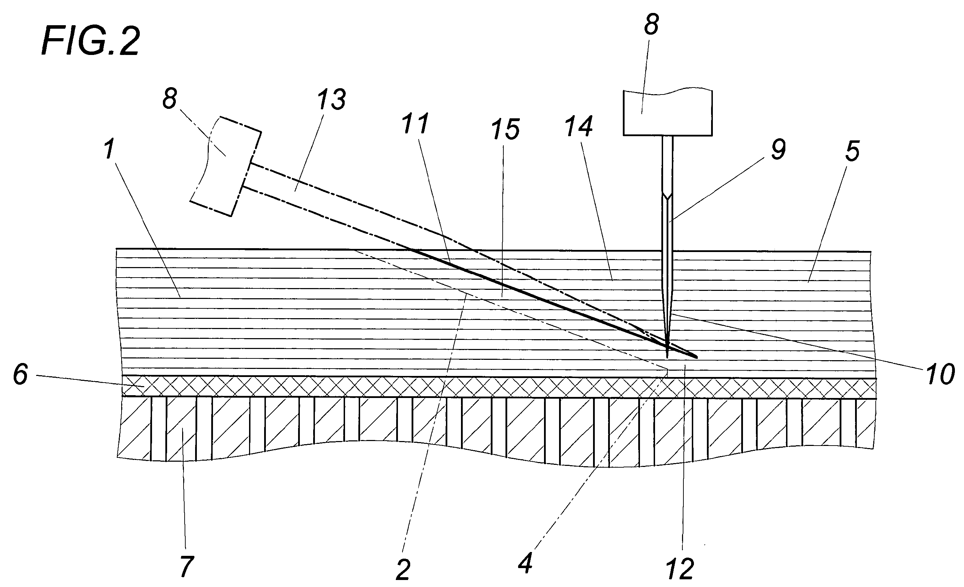

Um einen solchen Zuschnitt 1 herzustellen, wird gemäß der Fig. 2 das als Ausgangsmaterial dienende, mit Kunststoff imprägnierte, aber noch nicht ausgehärtete Fasergelege 5 an die Schneidauflage 6 eines mit Unterdruck beaufschlagbaren Schneidtischs 7 angesaugt und dadurch schnittgerecht festgehalten. Zum Schneiden dieses Fasergeleges 5 dienen entlang von sechs Achsen verfahrbare Messerköpfe 8, die mit Ultraschallgeneratoren für die Messeranregung ausgerüstet sind.

Gemäß dem dargestellten Ausführungsbeispiel wird gemäß der Fig. 2 zunächst mit Hilfe eines Messers 9 ein Vorschnitt 10 quer zum Fasergelege 5 entlang der strichpunktiert angedeuteten Sollkontur 4 und danach ein Entlastungsschnitt 11 geführt, der mit Abstand von der späteren Fase 2 vorgenommen wird, deren Sollverlauf in der Fig. 2 strichpunktiert angedeutet ist. Die Lagen des Vorschnitts 10 und des Entlastungsschnitts 11 werden so gewählt, dass sich die beiden Schnitte 10, 11 außerhalb des Querschnitts des Rands 3 des herzustellenden Zuschnitts 1 schneiden und mit Abstand oberhalb der Schneidauflage 6 im Fasergelege 5 enden. Dies hat den Vorteil, dass zwischen dem Zuschnitt 1 und dem restlichen Fasergelege 5 im Bereich der Sollkontur 4 eine Faserbrücke 12 bestehen bleibt, die das schnittgerechte Ansaugen des Fasergeleges 5 auch im Bereich der Sollkontur 4 sicherstellt.

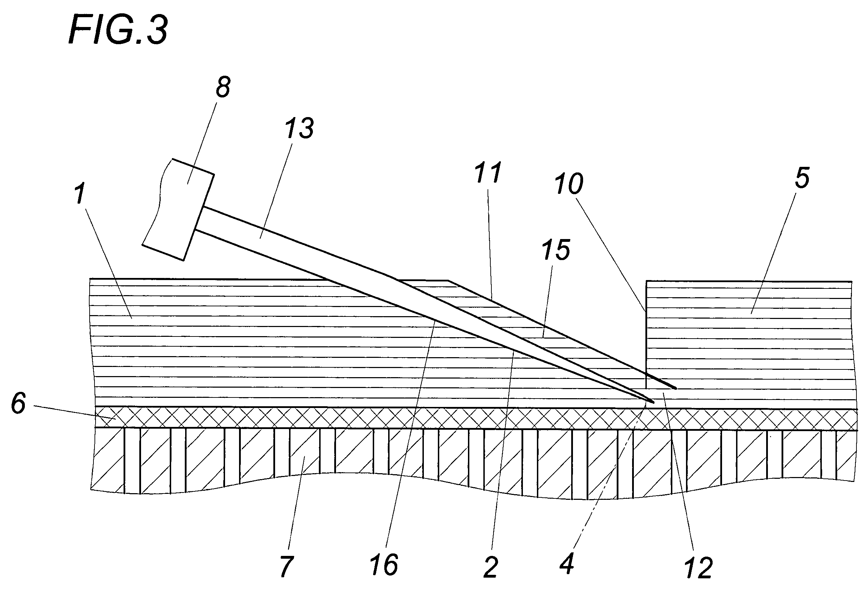

Das Messer 13 für den Entlastungsschnitt 11 schneidet im Zusammenwirken mit dem Vorschnitt 10 aus dem Fasergelege 5 einen Reststreifen 14 aus, der aus dem Fasergelege 5 entfernt werden kann, nicht aber entfernt werden muss. Aufgrund der Schnittführung des Entlastungsschnitts 11 bleibt in Bezug auf den Sollverlauf der Fase 2 eine Bearbeitungszugabe 15 bestehen, die erst durch einen nachfolgenden Fasenschnitt 16 entfernt wird, wie dies in der Fig. 3 veranschaulicht ist, in der aus Übersichtlichkeitsgründen der durch die Schnitte 10, 11 abgetrennte Reststreifen 14 entfernt wurde. Es lässt sich aus dieser Darstellung unmittelbar entnehmen, dass durch den Entlastungsschritt 11 und die verbleibende, vergleichsweise dünne Bearbeitungszugabe 15 die durch das Schneiden bedingte Belastung des für den Fasenschnitt 16 eingesetzten Messers 13 beschränkt bleibt, was den Einsatz dünnerer Messer 13 erlaubt. Es ist aber auch möglich, dickere und damit steifere Messer zu verwenden, um hohe Schnittgenauigkeiten sicherzustellen, weil die bei dickeren Messern höhere Messerbelastung durch die abzutrennende, dünne Bearbeitungszugabe 15 beschränkt bleibt. In diesem Zusammenhang ist zu berücksichtigen, dass eine Erwärmung des Fasergeleges 5 während des Schnitts weitgehend vermieden werden soll, um eine vorzeitige Aushärtung des Kunststoffs zu unterbinden, sodass die Schnittgeschwindigkeit und die dabei auftretenden Reibungskräfte einen erheblichen Einfluss auf die Ausbildung der Schnittflächen haben.

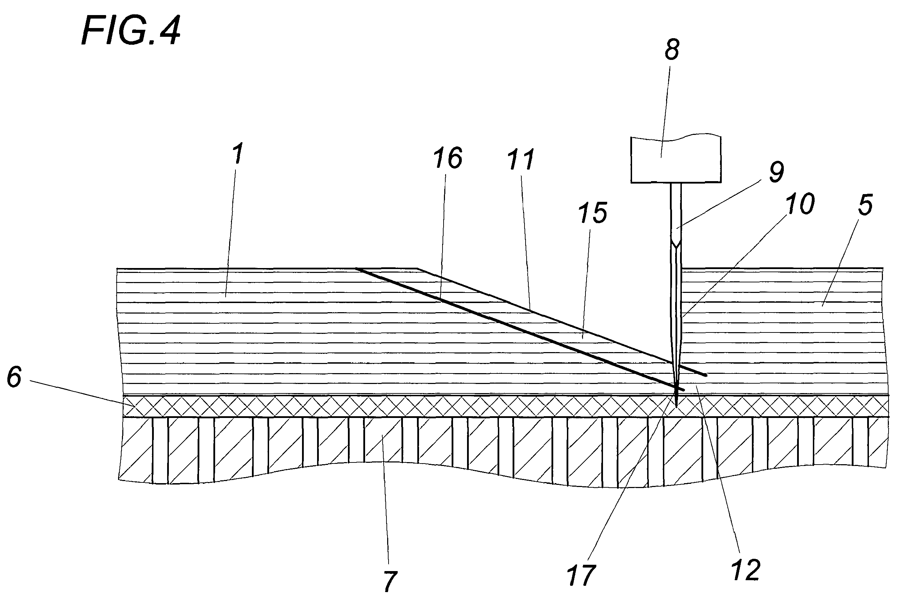

Da keiner der Schnitte 10, 11 und 16 das Fasergelege 5 vollständig durchtrennt, bleibt für das abschließende Schneiden der Sollkontur 4 das durch das Ansaugen bedingte Niederhalten des Fasergeleges über die Faserbrücke 12 aufrecht, was eine wesentliche Voraussetzung für einen genauen Konturschnitt 17 gemäß der Fig. 4 darstellt. Bei diesem Konturschnitt 17 wird die Faserbrücke 12 entlang der Sollkontur 4 durchtrennt, wobei das Messer 9 in die Schneidauflage 6 eindringt. Mit diesem Konturschnitt 17 wird auch die Bearbeitungszugabe vollständig vom Zuschnitt 1 abgetrennt, sodass mit dem Konturschnitt 17 der Zuschnitt fertiggestellt wird.

Wie den Fig. 2 bis 4 entnommen werden kann, können für den Vorschnitt 10 und den Konturschnitt 17 einerseits und für den Entlastungsschnitt 11 sowie den Fasenschnitt 16 jeweils dieselben Messer 9 bzw. 13 eingesetzt werden.

## Patentansprüche

1. Verfahren zum Herstellen eines Zuschnitts (1) aus einem Fasergelege (5) mit einem eine Fase (2) bildenden Rand (3), wobei das auf einer Schneidauflage (6) eines Schneidtischs (7) angesaugte Fasergelege (5) mit einem in die Schneidauflage (6) reichenden Konturschnitt (17) entlang der Sollkontur (4) des Zuschnitts (1) durchtrennt und mit einem unter einem flachen Fasenwinkel (α) entlang der Sollkontur (4) verlaufenden Fasenschnitt (16) mit der Fase (2) versehen wird, **dadurch gekennzeichnet, dass** das Fasergelege (5) zunächst durch zwei oberhalb der Schneidauflage (6) endende und außerhalb des Sollquerschnitts des Rands (3) verlaufende Schnitte vorgeschnitten wird, nämlich einen quer zum Fasergelege (5) entlang des Konturbereichs verlaufenden Vorschnitt (10) und einen eine Bearbeitungszugabe (15) zur Fase (2) bestimmenden Entlastungsschnitt (11), und dass dann die Fase (2) mit dem außerhalb der Sollkontur (4) im Fasergelege (5) endenden Fasenschnitt (16) geschnitten wird, bevor die Sollkontur (4) des Zuschnitts (1) durch den Konturschnitt (17) hergestellt wird.

2. Verfahren nach Anspruch 1, **dadurch gekennzeichnet, dass** der Vorschnitt (10) vor dem Entlastungsschnitt (11) durchgeführt wird.

3. Verfahren nach Anspruch 1 oder 2, **dadurch gekennzeichnet, dass** sich die Schnittflächen des Vorschnitts (10) und des Entlastungsschnitts (11) schneiden.

4. Verfahren nach Anspruch 2 oder 3, **dadurch gekennzeichnet, dass** das Fasergelege (5) vor dem Entlastungsschnitt (11) im Bereich der Fase (2) durch einen mit Abstand vom Vorschnitt (10) verlaufenden Einschnitt geteilt wird, der in der durch den Entlastungsschnitt (11) bestimmten Bearbeitungszugabe (15) endet.

5. Verfahren nach einem der Ansprüche 1 bis 4. **dadurch gekennzeichnet, dass** der Vorschnitt (10) in einer der Schnittfläche des Konturschnitts (17) entsprechenden Fläche durchgeführt wird.

## Claims

1. Method for producing a blank (1) from a fibre layup (5) having an edge (3) forming a chamfer (2), wherein the fibre layup (5), which is drawn onto a cutting support (6) of a cutting table (7), is cut through using a contour cut (17), extending into the cutting support (6), along the intended contour (4) of the blank (1) and is provided with the chamfer (2) using a chamfer cut (16) extending at a flat chamfer angle (α) along the intended contour (4), **characterised in that** the fibre layup (5) is firstly pre-cut by two cuts, which end above the cutting support (6) and extend outside the intended cross section of the edge (3), namely a preliminary cut (10) extending transversely to the fibre layup (5) along the contour region, and a relief cut (11) which determines a processing allowance (15) to the chamfer (2), and **in that** then the chamfer (2) is cut using the chamfer cut (16), which ends outside the intended contour (4) in the fibre layup (5), before the intended contour (4) of the blank (1) is produced by the contour cut (17).

2. Method as claimed in claim 1, **characterised in that** the preliminary cut (10) is carried out before the relief cut (11).

3. Method as claimed in claim 1 or 2, **characterised in that** the cut surfaces of the preliminary cut (10) and of the relief cut (11) intersect.

4. Method as claimed in claim 2 or 3, **characterised in that** the fibre layup (5) is divided before the relief cut (11) in the region of the chamfer (2) by a notch, which extends at a distance from the preliminary cut (10) and which ends in the processing allowance (15) determined by the relief cut (11).

5. Method as claimed in any one of claims 1 to 4, **characterised in that** the preliminary cut (10) is carried out in a surface corresponding to the cut surface of the contour cut (17).

## Revendications

1. Procédé de fabrication d'une découpe (1) à partir d'un non tissé de fibres (5) avec un bord (3) formant un chanfrein (2), le non tissé de fibres (5), aspiré sur un support de coupe (6) d'une table de coupe (7), étant découpé avec une découpe de contour (17) s'étendant dans le support de coupe (6), le long du contour prévu (4) de la découpe (1) et étant fourni avec le chanfrein (2) avec une découpe de chanfrein (16) s'étendant selon un angle de chanfrein plat (α) le long du contour prévu (4), **caractérisé en ce que** le non tissé de fibres (5) est d'abord prédécoupé en deux coupes se terminant au-dessus du support de coupe (6) et passant en dehors de la section transversale prévue du bord (3), à savoir une découpe préliminaire (10) s'étendant transversalement au non tissé de fibres (5) le long de la zone de contour et une coupe de décharge (11) déterminant un usinage supplémentaire (15) pour le chanfrein (2), et **en ce qu'**ensuite, le chanfrein (2) est découpé à l'aide de la découpe de chanfrein (16) se terminant à l'extérieur du contour prévu (4) dans le non tissé de fibres (5), avant que le contour prévu (4) de la découpe (1) soit fabriqué par la découpe du contour (17).

2. Procédé selon la revendication 1, **caractérisé en ce que** la découpe préliminaire (10) est réalisée avant la coupe de décharge (11).

3. Procédé selon la revendication 1 ou 2, **caractérisé en ce que** les faces de coupe de la découpe préliminaire (10) et de la coupe de décharge (11) sont sécantes.

4. Procédé selon la revendication 2 ou 3, **caractérisé en ce que** le non tissé de fibres (5) est partagé avant la coupe de décharge (11) dans la zone du chanfrein (2) par une coupe espacée de la découpe préliminaire (10), qui termine dans l'usinage supplémentaire (15) défini par la coupe de décharge (11).

5. Procédé selon l'une des revendications 1 à 4, **caractérisé en ce que** la coupe préliminaire (10) est réalisée dans une face correspondant à la face de coupe de la découpe du contour (17).
